# EUROPEAN PATENT APPLICATION

(11) **EP 1 699 052 A1**
(43) Date of publication of application: **06.09.2006**
(21) Application number: 05004537.6
(22) Date of filing: 02.03.2005
(51) Int. Cl.: G11B 23/40

(54) **Label having means of preventing deformation in a substrate**

(71) Applicant: Avery Dennison Zweckform Office Products Europe GmbH, 83626 Oberlaindern/Valley (DE)
(72) Inventor: Utz, Martin, 83703 Gmund am Tegernsee (DE); Ugolick, Ronald, San Dimas, CA (US)
(74) Representative: HOFFMANN EITLE

(57) **Abstract**

The present application relates to a label comprising a first layer being a paper layer or a polymer film layer and a second layer being a pressure-sensitive adhesive layer applied to one side of the first layer, characterized in that said label is provided with at least one flexible means and/or the pressure-sensitive adhesive is present in the form of a pattern. Furthermore, the present application also relates to a label sheet comprising in the following sequence: a backing material, a release layer, a pressure-sensitive layer and a top layer being a paper layer or a polymer film layer, wherein the top layer, being a paper layer or a polymer film layer, has detachment lines that are applied such that at least one sub-region is formed, characterized in that said sub-region(s) is (are) provided with at least one flexible means and/or that the pressure-sensitive adhesive is present in the form of a pattern.

## Description

The invention relates to a label having means of preventing deformation in a substrate, a label sheet containing at least one of said label, and the use of said label for application to CD's or DVD's.

Adhesive labels are widely used to individually mark or tag substrates of various shapes. Such labels are mostly made of paper wherein the backside surface is provided with an adhesive layer. However, when temperature and/or humidity changes occur, the substrate may suffer from deformation, often due to the different material properties of the label on the one hand and the substrate on the other. For example, this undesirable effect is often observed when a label is adhesively affixed to the surface of a CD or DVD because temperature and/or humidity changes always take place when using the CD/DVD in a CD/DVD player. In CD and/or DVD players, higher temperatures and lower humidity conditions are present compared to the conditions at the time the label was applied to the CD/DVD. Furthermore, when printing the label with an inkjet printer, and subsequently affixing the label to a substrate, for example a CD or DVD, dimensional changes of the label will occur within several hours as a result of the ink drying. As a consequence, this may also result in deformation of the substrate. In this regard, labels made of paper are particularly critical because the dimensional change of paper labels is large under different relative humidity conditions. Deformation of the substrates is, however, to be avoided. For example, in the case of a CD or DVD deformation may even lead to reading errors in the CD/DVD player.

To avoid the disadvantages of labels made of paper, labels of polymer films were recently developed. However, also in the case of polymer film labels, slight deformation of the CD/DVD was observed due to the aforementioned temperature and humidity changes.

Therefore, the object upon which the invention is based lies in the provision of a label that does not induce deformation of a substrate, such as a DVD or CD, after having been affixed thereto.

Another object of the present invention is the provision of a label sheet that provides such a label in a convenient form to be individually printed by an inkjet or laser printer.

The above first object is solved by a label comprising a first layer being a paper layer or a polymer film layer and a second layer being a pressure-sensitive adhesive layer applied to one side of the first layer, characterized in that said label is provided with at least one flexible means and/or said pressure-sensitive adhesive layer is present in form of a pattern.

The other object is solved by a label sheet comprising in the following sequence: a backing material, a release layer, a pressure-sensitive layer and a top layer being a paper layer or a polymer film layer, wherein the top layer, being a paper layer or a polymer film layer, has detachment lines that are applied such that at least one sub-region is formed, characterized in that said sub-region(s) is (are) provided with at least one flexible means and/or said pressure-sensitive adhesive layer is present in form of a pattern.

When the label according to the present invention is intended to be used for the application to CD's or DVD's, it is preferably circular corresponding to the shape of a CD or DVD. However, the present application is not limited to labels used for CD's or DVD's but the label may be affixed to any substrate of any shape. However, it is preferable that the label has the same shape as the substrate. The label may also have removable tabs and other areas that may allow the handling of the label so that direct contact with the exposed adhesive is avoided. These tabs may be easily removed after the label is adhered to the substrate. The size of said label is variable but it should not be larger than the substrate on which the label is intended to be applied to. For the application to standard CD's or DVD's being commercially available, it is preferable that the label according to the present invention has a diameter in the range of 35 to 120 mm, more preferable 80 to 120 mm, and most preferable 110 to 120 mm. For the application to CD's or DVD's it is preferable that the label has in its centre a punched hole having the same or larger size as the centre hole of a CD or DVD. The diameter of the centre hole is preferably in the range of 15 to 50 mm, more preferable 15 to 20 mm.

The label according to the present application comprises a first layer made of paper or a polymer film. The "layer made of paper" is defined as a layer that is based on a paper material. It is preferably an uncoated paper, an uncoated cardboard or a paper or cardboard coated with an ink-jet or laser printer coating. The first layer made of paper preferably has a thickness of 25 to 150 *µ*m, preferably 50 to 125 *µ*m.

According to an alternative embodiment, the first layer is made of a polymer film. The polymer film can be of any film-forming polymer or polymer blend, for example polyesters, polyolefins, polyamides, polyethers, polyacrylates, polystyrenes, polycarbonates, blends and mixtures thereof and laminates. The preferred thickness of the first layer made of a polymer film is 25 to 150 *µ*m, preferably 50 to 125 *µ*m. The thickness should be suitably selected depending on the stiffness of the film, i.e. inherently stiffer films would need to be thinner and vice versa. It is preferable that the polymer film is printable by using an ink-jet printer or a laser printer. Therefore, the polymer film may be provided with a top-coat for thermal stability and/or ink/toner receptivity and adhesion.

Furthermore, a pressure-sensitive adhesive layer is provided on one side of the first layer made of paper or a polymer film so that the label of the invention can be adhesively affixed to any suitable article, such as a CD/DVD. The pressure-sensitive adhesive usually has a thickness of 10 to 125 *µ*m, preferably 10 to 50 *µ*m, and most preferably a thickness in the range of 15 to 25 *µ*m. The adhesive may also be present in the form of a pattern, in which case, the overall amount of adhesive must be sufficient to adhere the label to the substrate. The exact quantity of adhesive is dependent on how aggressively the adhesive adheres the label to the substrate. More aggressive adhesives need be present in smaller quantities than less aggressive adhesives. The pressure-sensitive adhesive may be any known pressure-sensitive adhesive. This type of adhesive includes rubber-based pressure-sensitive adhesives, acrylic pressure-sensitive adhesives, vinyl ether pressure-sensitive adhesives, silicone adhesives and mixtures of two or more thereof. Such pressure-sensitive adhesive materials are described in "Adhesion and Bonding", Encyclopaedia of Polymer Science and Engineering, Vol. 1, pages 476-576, Interscience Publishers, 2^{nd} edition, 1985. Suitable pressure-sensitive adhesive materials contain a polymer as a principle constituent, for instance acrylic type polymers, block copolymers, natural or recovered rubbers, styrene butadiene rubbers, random ethylene and vinyl acetate copolymers, ethylene vinyl acrylic terpolymers, polyisobutylene poly(vinylethers) etc. The pressure-sensitive adhesive materials are typically characterized by their glass transition temperatures ranging from approximately -70°C to approximately 10°C.

To avoid deformation of the substrate, for example a CD and DVD, respectively, at which the label of the present invention is applied to, the label is at least provided with means of reducing deformation in the substrate, i.e. with one of the following alternative characterizing features:
- The label is provided with at least one flexible means; or
- The pressure-sensitive adhesive layer is present in the form of a pattern.

In a particularly preferred embodiment, according to the present invention, both of the above-mentioned alternative features are combined, i.e. the label according to the present application is provided with at least one flexible means and the pressure-sensitive adhesive layer present is in the form of a pattern.

In the following, the embodiment, wherein the label according to the present invention is provided with at least one flexible means, is explained in further detail.

The term "flexible means" used in the present application is defined as means that provide the label with expansion areas and keep the label flexible, allowing a compensatory motion of the label so that no deformation of the CD or DVD occurs upon temperature or humidity change. According to the present invention, such flexible means are preferably through cuts, discontinuous cuts, perforation lines or relief cuts. It is also possible that the lines are through cuts with small ties in place to keep the label from falling apart. Said flexible means in the form of through cuts, discontinuous cuts, perforation lines or relief cuts may be concentric or straight or random lines. Such lines may have any orientation. Parallel lines are preferred, but other orientations of lines, for example radially oriented lines, or random cuts are also possible. It is also possible to combine any of the embodiments of flexible means with each other, for example, parallel lines with radially oriented lines, parallel lines with circular lines and so on. With regard to the perforation lines it is preferred that the ratio of the cuts to ties is about 5-20 to 1, most preferable 10 to 1. In the case where the first layer of the label is made of paper, the discontinuous cuts, the perforation lines and the relief lines, respectively, may preferably be parallel with preferred orientation in the fibre direction of the paper. In the case where the first layer of the label is made of a polymer film having no particular film orientation, the flexible means may be applied as concentric lines.

The term "flexible means" also comprises partially through cut lines. These lines may be formed by punching partially through the first layer of the label. The lines may be cut 50% to 98% through the thickness of the first layer, preferably 90% to 95% through the thickness of the first layer. Further examples for such partially through cut lines may be found in US 5,853,837, US 5,993,928 and US 5,997,680.

The number of flexible means per label is at least one. Depending on the material of the first layer of the label, the number of flexible means is to be suitably adjusted. In many cases, one or two flexible means applied to the label are sufficient. However, in other cases also three or more flexible means may be applied. The flexible means may be suitably positioned on the label, i.e. either in the outer or inner portion of the label or both. However, the inventors of the present invention found out that a larger deformation, induced by the labels upon temperature or humidity change, occurs at the outer diameter of the CD/DVD than at the inner diameter. As a consequence, it is preferable that the flexible means are positioned in the outer portion of the label.

Next, the embodiment is further explained wherein the label according to the present invention is provided with a pressure-sensitive adhesive layer that is present in the form of a pattern. The expression "adhesive in the form of a pattern" means that the label has adhesive and non-adhesive areas. The definition also includes embodiments where the adhesive is continuously applied to one side of the first layer but wherein parts are covered by, for example, a liner. In such a way a pattern of adhesive and non-adhesive areas is formed. As mentioned above, the application of the adhesive in the form of a pattern ensures that between the label and the surface of the substrate, for example a CD/DVD, at which the label is adhesively affixed, are adhesive and non-adhesive areas. Due to the non-adhesive areas the label is able to accept some degree of movement and expansion so that potential dimensional change of the label is not directly transferred to the substrate. In doing so, deformation of the substrate, and thus, for example, reading errors of CD's/DVD's due to such a deformation, can be effectively avoided. The pattern of the adhesive layer may be formed by large or small adhesive and non-adhesive areas. For example, in the case of large adhesive and non-adhesive areas, the adhesive may exist as a ring at the center portion and the outer edge of the label. The entire central portion would be adhesive-free. As an alternative, the adhesive may be applied as radial patterns with large wedges of non-adhesive areas. In the case of smaller adhesive and non-adhesive areas, the pattern may be formed by a multitude of dots, lines or other geometric figures, so long as the pattern allows compensatory motion of the label affixed to the CD/DVD. The lines and dots may differ in size, provided that possible compensatory motion of the label is retained. The lines and other patterns usually have a thickness of 0.3 *µ*m to approx. 100 *µ*m, preferably approx. 0.5 *µ*m to approx. 50 *µ*m, with even greater preference for approx. 2 *µ*m to approx. 20 *µ*m. The width of the lines may likewise vary. An example of a suitable line-width range is from approx. 12 *µ*m to approx. 250 *µ*m, preferably from approx. 25 *µ*m to approx. 125 *µ*m, with even greater preference from approx. 50 *µ*m to approx. 75 *µ*m. The pattern may, for example, be a grid or a lattice made up of lines, a woven pattern, a honeycomb, diagonal, straight and curved lines, geometric figures such as hexagons, rectangles, overlapping circles or triangles or crossed hatches. Combinations of patterns may be used as well, for instance grids of intersecting lines together with random or regularly arranged dots.

To provide the label according to the present application to the customer in a convenient way, it may be provided as part of a label sheet. The provision of a label sheet has the advantage that direct printing onto the labels by an ink-jet printer or laser printer is feasible.

The label sheet according to the invention may be of any size, though it preferably has the size of an A4 of A3 format and standard US sizes of sheets, such as letter (8.5 x 11 inches), legal (8.5 x 14 inches) and tabloid (11 x 17 inches) .

The label sheet of the present invention comprises in the following sequence a backing material, a release layer, a pressure-sensitive layer, and a top layer made of paper or a polymer film.

The top layer made of a paper or a polymer film corresponds to the first layer of the label as described above. The top layer may be provided with an optional ink or toner receptive layer as defined above.

The pressure-sensitive layer is the same as explained above.

The backing material is a support layer known in the art relating to label sheets. It is preferably comprised of paper, cardboard, a plastic or metal foil or integrated systems of them, and possess at least on one side, facing the adhesive layer, a release layer that preferable constitutes silicone.

The top layer made of paper or a polymer film is provided with detachment lines that are applied such that at least one sub-region is formed. The detachment line may be a punched or perforated line. A punched line is particularly preferred. This at least one sub-region of said label sheet becomes at least one label according to the present invention as described above when such at least one sub-region is removed from the label sheet. As a consequence, the shape and the size of the sub-region is the same as the intended size of the label to be used. In the same way as explained above, the sub-region(s) is (are) provided with at least one flexible means, and/or said pressure-sensitive adhesive is present in the form of a pattern. In addition, the at least one sub-region may comprise at least one removable tab, distal to the label, for the purpose of handling the sub-region after removal from the backing material without contacting the exposed adhesive.

The invention's embodiments will now be explained in more detail on the basis of the attached drawing, in which:
Figure 1 represents an embodiment of the label according to the invention having concentric perforation lines.
Figure 2 represents a further embodiment of the label according to the invention, in which perforation lines are arranged in parallel.
Figure 3 shows a label according to the present invention, in which flexible means are radially oriented in the inner portion of the label.
Figure 4 shows a label according to the present invention, in which flexible means are radially oriented in the outer portion of the label.
Figure 5 shows a label according to the present invention, in which a ring of adhesive is applied at the center hole and the outer edge of the label.

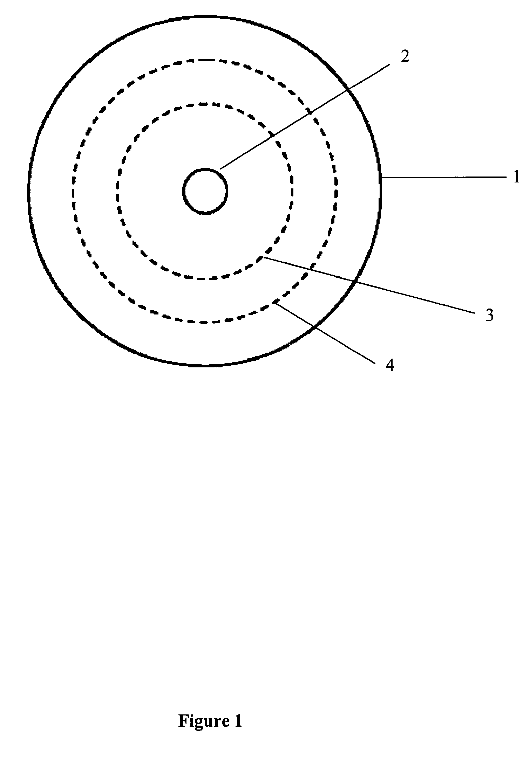

Figure 1 represents a label in accordance with the invention; this label (1) has a circular shape with a circular hole in its centre (2). Furthermore, two concentric perforations (3,4) are applied at the label. Such perforation lines are expandable and act as flexible joints whereby deformation of the DC/DVD can be effectively avoided.

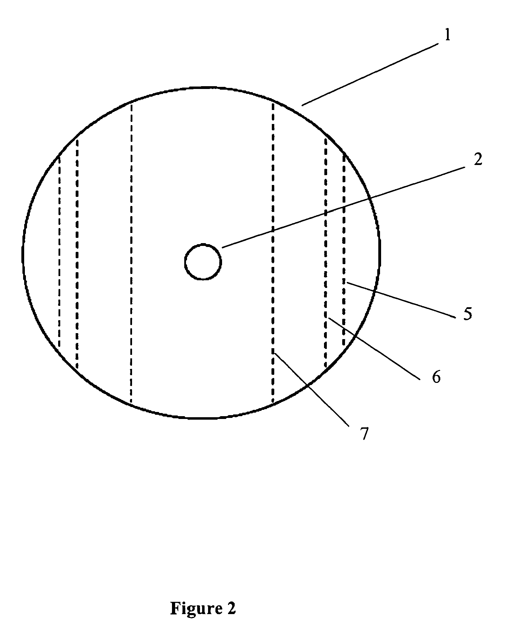

Figure 2 represents a label in accordance with the invention as well. This label (1) has also a circular hole in its centre (2). Perforation lines (5,6,7) are arranged in parallel in the label. The direction of the perforation lines is the same as the fibre direction of the paper used for the label.

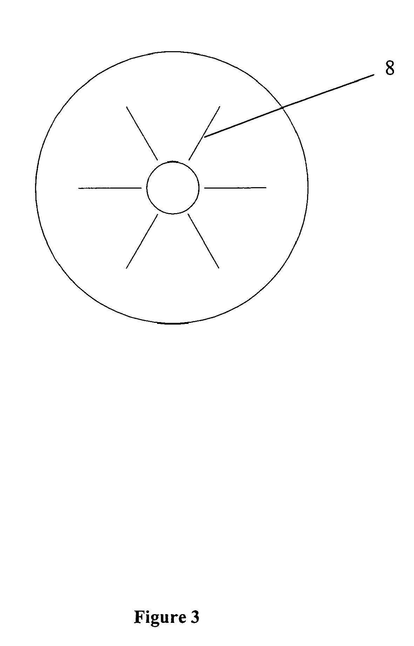

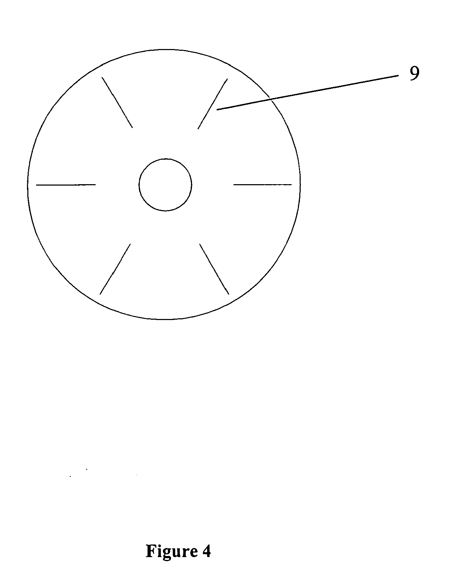

Figures 3 and 4 show labels according to the present invention wherein cuts (8,9) are radially oriented. In Figure 3 said cuts (8) are placed in the inner portion of the label, whereas in Figure 4 said cuts (9) are placed in the outer portion of the label. When attached to a CD/DVD, the cuts of both embodiments allow for expansion of the label thereby preventing the CD/DVD from deformation.

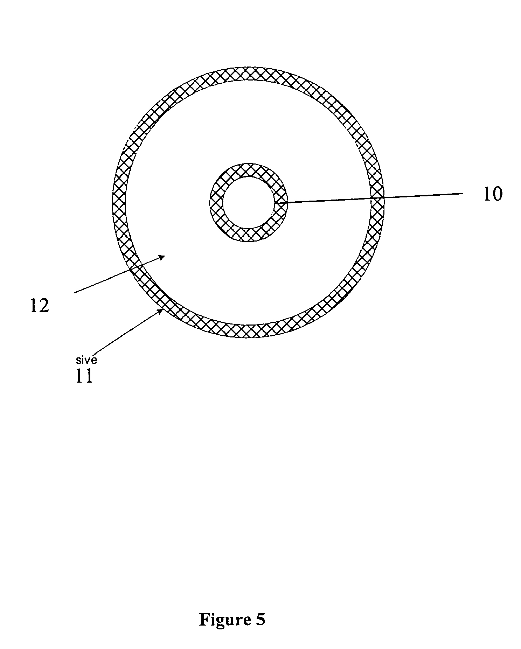

Figure 5 shows an embodiment of the present invention wherein the pressure-sensitive adhesive is present in the form of a pattern. In particular, the adhesive is applied in the form of a ring at the center hole (10) and the outer edge (11) of the label. The entire central portion (12) is adhesive-free allowing expansion. This could be accomplished by die cutting a thin liner so that when the label is removed from the label sheet, the liner remains on the back of the label, but several mm's of adhesive is exposed near the edge and the central hole.

## Claims

1. A label comprising
a first layer made of paper or a polymer film and a second layer being a pressure-sensitive adhesive layer applied to one side of the first layer,
**characterized in that**
said label is provided with at least one flexible means, and/or
said pressure-sensitive adhesive layer is present in the form of a pattern.

2. The label according to claim 1, wherein the flexible means is/are through cuts, partial through cuts, discontinuous cuts perforation lines or relief cuts.

3. The label according to claim 1, wherein the pattern of the pressure-sensitive adhesive layer comprises a plurality of dots or lines or combination thereof.

4. The label according to claim 1, wherein the pattern of the pressure-sensitive adhesive layer comprises a ring at the center hole and the outer edge.

5. The label according to any of the preceding claims, wherein the label is circular and has a diameter in the range of 35 to 120 mm.

6. A label sheet comprising
in the following sequence: a backing material, a release layer, a pressure-sensitive layer, and a top layer made of paper or a polymer film,
said top layer having detachment lines that are applied such that at least one sub-region is formed,
**characterized in that**
said sub-region(s) is (are) provided with at least one flexible means, and/or
said pressure-sensitive adhesive layer is present in the form of a pattern.

7. The label sheet according to claim 6, wherein the sub-region(s) is(are) circular and has (have) a diameter in the range of 35 to 120 mm.

8. Use of the label according to claim 1 for labelling of a CD or DVD.

9. Use according to claim 8, wherein the label is circular.
